# EUROPÄISCHE PATENTSCHRIFT

(11) **EP 0 474 709 B1**
(45) Veröffentlichungstag und Bekanntmachung des Hinweises auf die Patenterteilung: **20.03.1996**
(21) Anmeldenummer: 90908459.2
(22) Anmeldetag: 01.06.1990
(51) Int. Cl.: F02P 5/15, G01L 23/22

(54) **VERFAHREN ZUR ZYLINDERSELEKTIVEN ERFASSUNG UND AUSWERTUNG VON KLOPFSIGNALEN EINER BRENNKRAFTMASCHINE**
PROCESS FOR DETECTING AND EVALUATING KNOCK SIGNALS IN THE INDIVIDUAL CYLINDERS OF AN INTERNAL COMBUSTION ENGINE
PROCEDE DE DETECTION ET D'EVALUATION CYLINDRE PAR CYLINDRE DE SIGNAUX DE COGNEMENT DE MOTEURS A COMBUSTION INTERNE

(30) Priorität: 01.06.1989 DE 3917907
(43) Veröffentlichungstag der Anmeldung: 18.03.1992
(73) Patentinhaber: SIEMENS AKTIENGESELLSCHAFT, D-80333 München (DE)
(72) Erfinder: ELLMANN, Siegfried, D-8000 München 80 (DE); WIER, Manfred, D-8411 Wenzenbach (DE)
(86) Internationale Anmeldenummer: DE9000424
(87) Internationale Veröffentlichungsnummer: WO9015243

(56) Entgegenhaltungen:
- EP-A- 0 101 342
- EP-A- 0 203 617
- EP-A- 0 293 573
- GB-A- 2 154 657
- GB-A- 2 163 812
- US-A- 4 711 212
- US-A- 4 711 214
- US-A- 4 727 842
- US-A- 4 750 103

## Beschreibung

Die Erfindung betrifft ein Verfahren zur zylinderselektiven Erfassung und Auswertung von Klopfsignalen einer Brennkraftmaschine nach dem Oberbegriff des Patentanspruchs (GB-A 2 163 812).

Zum Senken des Kraftstoffverbrauchs und zum Erhöhen des Motordrehmoments werden beim Automotor hohe Verdichtungsverhältnisse angestrebt. Mit zunehmenden Verdichtungsverhältnissen besteht die Gefahr der explosionsartigen, klopfenden Verbrennung des Luft-Kraftstoff-Gemisches, die eine erhöhte thermische und mechanische Belastung der Bauteile des Motors mit sich bringt. Somit ist eine Klopfgrenze gegeben, die außer von dem Verdichtungsverhältnis noch zusäztlich unter anderem von Alterungseffekten (Ablagerungen), der Brennraumform, der Gemischzusammensetzung, der Kraftstoffqualität und der Motortemperatur abhängig ist. Zur Erzielung eines günstigen effektiven Wirkungsgrades besteht jedoch der Wunsch, den Motor möglichst nahe an dieser Klopfgrenze zu betreiben.

Der vorliegenden Erfindung liegt deshalb die Aufgabe zugrunde, ein Verfahren zur Erfassung und Auswertung von Klopfsignalen einer Brennkraftmaschine anzugeben, welches einen Betrieb der Brennkraftmaschine dicht unterhalb der Klopfgrenze ermöglicht.

Diese Aufgabe wird durch die kennzeichnenden Merkmale des Patentanspruchs gelöst.

Bei den erfindungsgemäßen Verfahren wird als Klopfsensor ein Drucksensor im Verbrennungsraum eines Zylinders verwendet, der als Ausgangssignal eine vollständige Information über den Druckverlauf im Verbrennungsraum liefert. Um den hochfrequenten Klopfanteil vom niederfrequenten Nutzdruckanteil zu trennen, wird ein Hochpaßfilter verwendet. Um ein mögliches "Übersprechen" anderer mit dem Motor verbundener Schwingungserreger (Ventile, benachbarte Kolben usw.) zu unterbinden, wird das verstärkte und gefilterte Sensorsignal nur innerhalb eines kurbelwinkelsynchronen Meßfensters zur Auswertung freigegeben, in welchem Motorklopfen auftreten kann. Das so aufbereitete, "Klopfdruck" genannte Sensorsignal wird nach den erfindungsgemäßen Kriterien ausgewertet.

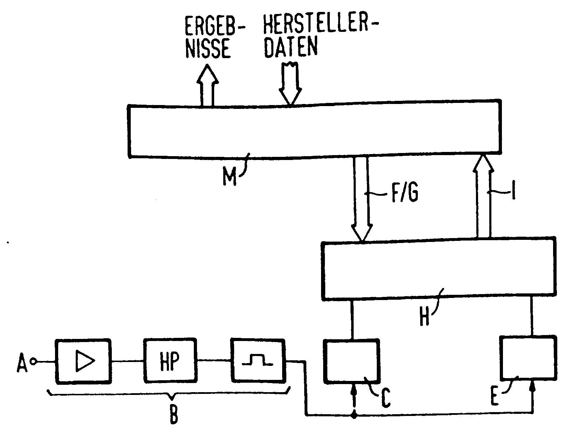

Im folgenden wird die vorliegenden Erfindung anhand der Zeichnung im einzelnen beschrieben, in der ein Blockschaltbild mit mehreren Funktionsbausteinen zur Durchführung des Verfahrens zur Erfassung und Auswertung des Spitzenwertes des Klopfdrucks dargestellt ist.

Einem Signaleingang A wird ein von einem im Brennraum eines Zylinders der Brennkraftmaschine angeordneten Drucksensor ein den jeweils erfaßten Brennraumdruck repräsentierendes elektrisches Signal zugeführt, das in einer einen Eingangsverstärker, ein Hochpaßfilter und eine Meßfensterschaltung umfassenden Eingangsschaltungsanordnung B verstärkt, hochpaßgefiltert und in einem begrenzten kurbelwinkelsynchronen Meßfenster an eine Spitzenwert-Erfassungsschaltung C und eine Zeiterfassungsschaltung E ausgegeben wird. In der Zeiterfassungsschaltung E wird die Klopfdauer (Zeit, in der das Sensorsignal den Referenzwert übersteigt) ermittelt. Die Ausgangssignale der Spitzenwert-Erfassungsschaltung C und der Zeit-Erfassungsschaltung E werden an Eingänge einer Auswerteschaltung H gelegt, die ein Auswerte-Ergebnissignal an eine Motormanagement-Verarbeitungseinheit M abgibt. Diese Verarbeitungseinheit M, die vorzugsweise mit einem Mikroprozessor zur Verarbeitung der ihr eingegebenen Signale versehen ist, gibt Ergebnissignale aus, die dazu benutzt werden, in einem Kennfeld betriebspunktabhängig gespeicherte Zündwinkel-Steuerwerte entsprechend den ermittelten Signalen zu korrigieren.

Der Verarbeitungseinheit M sind Hersteller-Daten fest eingegeben, die zur Verarbeitung mitherangezogen werden. Außerdem gibt diese Verarbeitungseinheit M bestimmte statistische Daten an die Auswerteeinrichtung H.

Im einzelnen sieht das mittels der gezeigten Schaltungsanordnung durchzuführende Verfahren vor, daß das aufbereitete Sensorsignal in der Spitzenwert-Erfassungsschaltung C gleichgerichtet wird und der Spitzenwert des Klopfdrucks als Klopfsignal in jedem Meßfenster erfaßt und gespeichert wird. Aus einer von der Verarbeitungseinheit M vorgegebenen Zahl dieser gespeicherten Spitzenwerte wird in der Auswerteschaltung H der Mittelwert und ein Wert für die Streuung errechnet. Aus den errechneten Werten werden nach von der Verarbeitungseinheit M vorgegebenen Verknüpfungsformeln Referenzwerte für den Vergleich mit dem Klopfsignal für die Klopfregelung und entsprechend diesem Vergleich Korrekturwerte für die in einem Kennfeld betriebspunktabhängig gespeicherten Zündwinkel-Steuersignale ermittelt und über die Motormanagement-Verarbeitungseinheit M ausgegeben.

Das beschriebene Verfahren wird für jeden Zylinder separat angewendet, so daß die Klopfregelung und die Korrektur des Zündwinkel-Kennfeldes für jeden Zylinder individuell durchgeführt werden können.

## Patentansprüche

1. Verfahren zur zylinderselektiven Erfassung und Auswertung von Klopfsignalen einer Brennkraftmaschine, die mit in einem Kennfeld betriebspunktabhängig gespeicherten Zündwinkel-Steuersignalen betrieben wird, wobei ein den Druck in einem Zylinder repräsentierendes, innerhalb eines kurbelwinkelsynchronen Meßfensters, innerhalb dessen Motorklopfen nur auftreten kann, verstärktes und hochpaßgefiltertes Sensorsignal, Klopfdruck genannt, ausgewertet wird, indem aus dem Klopfdruck ermittelte Klopfsignale mit einem Referenzwert verglichen werden,
**dadurch gekennzeichnet**,
daß als Klopfsignal in jedem Meßfenster der Spitzenwert des Klopfdruckes ermittelt und gepeichert wird,
daß laufend mit einer vorgebbaren Anzahl der letzten Spitzenwerte des Klopfdruckes ein Mittelwert und ein Wert für die Streuung ermittelt wird, und
daß die ermittelten Werte
a) zur Bildung des Referenzwertes, und
b) zur Korrektur der Zündwinkel-Steuerwerte im Kennfeld an eine Motormanagement-Verarbeitungseinheit weitergegeben werden.

## Claims

1. Process for detecting and evaluating knock signals in the individual cylinders of an internal combustion engine which is operated with ignition angle control signals stored in a characteristic diagram as a function of operating points, a sensor signal, referred to as knock pressure, which represents the pressure in a cylinder and is amplified and high-pass filtered within a crank angle-synchronous measuring window, only within which engine knocking can occur, being evaluated in that knock signals derived from the knock pressure are compared with a reference value, characterized in that in each measuring window the peak value of the knock pressure is derived and stored as knock signal,
in that a mean value and a value for the variation are continuously derived using a predeterminable number of the last peak values of the knock pressure, and
in that the derived values are passed on to an engine management processing unit
a) for forming the reference value and
b) for correcting the ignition angle control values in the characteristic diagram.

## Revendications

1. Procédé de détection et d'exploitation, cylindre par cylindre, de signaux de cliquetis d'un moteur à combustion interne fonctionnant avec des signaux de commande de l'angle d'allumage mémorisés en fonction du point de fonctionnement dans un champ de caractéristiques, procédé selon lequel on exploite un signal de capteur, nommé pression de cliquetis, représentant la pression dans un cylindre, amplifié et filtré par un filtre passe-haut, à l'intérieur d'une fenêtre de mesure synchronisée avec le vilebrequin, à l'intérieur de laquelle, seulement, peuvent se produire des cliquetis, et les signaux de cliquetis déterminés à partir de la pression de cliquetis sont comparés à une valeur de référence,
caractérisé en ce que
- comme signal de cliquetis, on détermine et on met en mémoire, dans chaque fenêtre, la valeur de crête de la pression de cliquetis,
- on détermine en continu, avec un nombre, préfini, des dernières valeurs de crête de la pression de cliquetis, une valeur moyenne et une valeur de dispersion, et
- on transmet les valeurs obtenues à une unité de traitement pour la commande du moteur
a) pour former la valeur de référence, et
b) pour corriger les valeurs de commande de l'angle d'allumage dans le diagramme caractéristique.
